# FASCICULE DE BREVET EUROPEEN

(11) **EP 0 317 908 B1**
(45) Date de publication et mention de la délivrance du brevet: **25.08.1993**
(21) Numéro de dépôt: 88119182.9
(22) Date de dépôt: 18.11.1988
(51) Int. Cl.: B65B 55/02

(54) **Procédé et dispositif pour remplir aseptiquement avec un fluide un emballage**
Verfahren und Vorrichtung zum aseptischen Füllen einer Verpackung mit einer Flüssigkeit
Method and device for the aseptic filling of a package with a liquid

(30) Priorité: 25.11.1987 CH 4584/87
(43) Date de publication de la demande: 31.05.1989
(73) Titulaire: SOCIETE DES PRODUITS NESTLE S.A., 1800 Vevey (CH)
(72) Inventeur: Löliger, Willi, CH-3510 Konolfingen (CH)

(56) Documents cités:
- EP-A- 0 236 107
- EP-A- 0 271 242

## Description

L'invention concerne un procédé et un dispositif pour remplir aseptiquement avec un fluide un emballage pourvu d'un embout avec membrane extérieure déchirable.

Le brevet EP 72699 concerne déjà un dispositif pour le remplissage aseptique d'emballage avec un fluide comportant une tête de remplissage avec une vanne pour régler le débit d'arrivée du fluide sur un emballage pourvu d'un embout avec membrane extérieure déchirable. Ce dispositif présente une série d'inconvénients. Tout d'abord, lors du remplissage, c'est la pression du fluide qui déchire la membrane extérieure. Ce qui conduit à des déchirures totalement indéfinies qui peuvent s'engager jusque dans la zone de scellage pour la fermeture de l'emballage et conduire ainsi à des défauts d'étanchéité dudit emballage. D'autre part, le dispositif, objet de ce brevet, comporte un système avec deux mouvements indépendants sur l'arbre vertical, pour l'arrivée du fluide d'une part, et pour faire le vide sur l'espace de tête d'autre part. Finalement, ce dispositif nécessite sur l'axe vertical la présence de joints d'étanchéité, dont la durée de vie est limitée et qui peuvent provoquer une infection bactérienne quand elles sont usées.

Le brevet EP 236 107 concerne également un système pour remplir aseptiquement des conteneurs et comprenant une vanne pour permettre l'arrivée de fluide. Pour opérer, il faut d'une part descendre la vanne pour déchirer l'embout et ensuite remonter la vanne pour permettre l'arrivée du fluide. Cette obligation de double mouvement est désavantageuse.

La présente invention, permet de mettre à disposition de l'utilisateur un procédé et un système ne présentant aucun des inconvénients précités. Selon l'invention, la déchirure de la membrane extérieure se fait de manière nette et définie, la vanne pour régler le débit d'arrivée de fluide est à un seul mouvement et donc à un seul entraînement et il n'y a pas de joint d'étanchéité devant être remplacé fréquemment.

L'invention concerne un procédé pour remplir aseptiquement avec un fluide un emballage pourvu d'un embout avec membrane extérieure déchirable, dans lequel, l'emballage étant stérile et fermé, on stérilise l'espace de tête de remplissage et la partie extérieure de la membrane déchirable et à la fin du remplissage on ferme l'arrivée de fluide et on admet de la vapeur ou de l'air stérile pour déplacer le fluide restant de l'espace de tête de remplissage vers une conduite de vidange, on coupe la membrane extérieure déchirable et on admet le fluide dans l'emballage de manière concomittante et on admet la vapeur ou l'air stérile perpendiculairement par rapport à la direction de déplacement du fluide.

La stérilisation préalable de l'espace de tête de remplissage se fait pendant 2 à 30 secondes à une température comprise entre 135 et 165°C et sous une pression de vapeur comprise entre 2 et 6 atmosphères.

A la fin du cycle de remplissage, l'opération de nettoyage se fait avec de la vapeur, à une pression comprise entre 1 et 4 atmosphères pendant 0,5 à 2 secondes à une température comprise entre 120 et 150°C. Si on opère avec de l'air stérile, on l'introduit à une pression comprise entre 0,5 et 3 atmosphères et à température ambiante.

L'invention concerne en outre un dispositif pour la mise en oeuvre de ce procédé comprenant une tête de remplissage comportant une vanne pour régler le débit d'arrivée de fluide et des moyens de coupe, un support d'emballage disposé sous la tête de remplissage et prévu pour sceller l'emballage en fin de remplissage, un conduit d'arrivée et de sortie de fluide et sur le bas de ladite tête de remplissage une vanne d'arrivée de vapeur et une vanne avec une conduite de sortie de vapeur et de vidange pour le nettoyage en fin de remplissage dans lequel la vanne pour régler le débit d'arrivée de fluide est telle que ses moyens de coupe coupent la membrane déchirable lors de son ouverture, cette vanne a un axe qui est perpendiculaire à l'axe du conduit d'arrivée et de sortie de fluide et la vanne d'arrivée de vapeur et la vanne avec une conduite de sortie de vapeur sont disposées perpendiculairement par rapport à l'axe du conduit d'arrivée et de sortie de fluide.

Par emballage, on entend aussi bien des emballages plastiques que des emballages en carton ou tout autre type d'emballage du domaine alimentaire ou médical. Par fluide, on entend aussi bien des solutions aqueuses, que du lait, des jus de fruits ou de légumes ou des produits plus visqueux, tels que confiture, marmelade et autres, avec ou sans morceaux.

Normalement les conduits d'arrivée et de sortie de fluide sont dans le prolongement l'un de l'autre. Le support d'emballage est constitué par des mâchoires pour le maintien en place de l'emballage et une tête de scellage.

Avant le remplissage, on effectue une stérilisation de l'espace de tête de remplissage, ainsi que de la surface extérieure de la membrane déchirable. Ceci se fait grâce à la vanne d'arrivée de vapeur. L'autre vanne disposée latéralement sur le bas de la tête de remplissage sert d'une part à l'évacuation de la vapeur lors de la stérilisation et d'autre part à l'évacuation de fluide résiduel en fin de remplissage. Ces deux vannes sont disposées soit de part et d'autre, soit parallèlement du même côté du plan formé par l'axe de conduit d'arrivée et de sortie de fluide et l'axe de la vanne pour régler le débit d'arrivée de fluide et perpendiculairement à l'axe du conduit d'arrivée et de sortie de fluide. Il est bien entendu qu'avant le remplissage, on fait aussi une stérilisation du conduit d'arrivée et de sortie de fluide.

Dans le dispositif selon l'invention, l'axe de la vanne pour régler le débit d'arrivée de fluide et l'axe de la vanne d'arrivée de vapeur respectivement l'axe de la vanne de sortie de vapeur et de vidange font un angle compris entre 40 et 80°.

Le grand intérêt du dispositif selon l'invention est d'avoir un système de remplissage dans lequel, dans un même mouvement et donc avec un seul entraînement, on peut déchirer la membrane extérieure de l'embout et en même temps admettre le fluide dans l'emballage.

C'est la partie inférieure de la vanne de réglage de débit de fluide qui fait fermeture/ouverture pour l'entrée du fluide: l'ouverture est de forme tronconique ou cylindrique. Si on a un fluide avec des morceaux, on choisit plutôt une ouverture cylindrique, car il n'y a alors que peu de risques que les morceaux restent coincés lors de la fermeture de la vanne. Les joints d'étanchéité sur la fermeture sont soit disposés sur le bas de la vanne, soit sur l'ouverture d'entrée de fluide dans l'emballage.

Le bas de la vanne de réglage de débit de fluide comporte également les moyens de coupe. Si on opère sans morceaux, on choisit plutôt comme moyens de coupe des couteaux radiaux et verticaux, par exemple deux couteaux disposés perpendiculairement. Mais on peut également prévoir plus de deux couteaux. Si on opère avec des morceaux, on choisit plutôt des moyens de coupe constitués par des couteaux en forme de U, et dans ce cas, il est prévu entre le conduit d'arrivée de fluide et l'emballage une chambre de passage intermédiaire.

On peut envisager au moins deux types d'emballage: soit un emballage avec un embout comportant une membrane intérieure de fermeture, tel que représenté sur les figures et dans le brevet EP 72699, soit un emballage avec embout sans membrane interne de fermeture. Dans ce cas, la fermeture de l'emballage se fait en scellant directement la face de la poche contre l'embout.

La vanne pour régler le débit d'arrivée de fluide comporte une membrane souple ou une membrane à soufflets assurant l'étanchéité entre le passage du fluide et les parties purement mécaniques.

Lors de la mise en place d'un nouvel emballage, on peut également, pour éviter toute infection bactérienne, laisser ouvert la vanne d'arrivée de vapeur au moins partiellement.

On peut grâce au dispositif selon l'invention construire toute une ligne de remplissage aseptique, dans laquelle on dispose en série au moins deux dispositifs décrits ci-dessus. On prévoit de préférence entre deux et huit dispositifs de remplissage.

La suite de la description est faite en référence aux dessins sur lesquels:
Fig 1 est une représentation en coupe du dispositif selon l'invention, la vanne d'arrivée de fluide étant fermée.
Fig 2 est une coupe partielle selon la ligne II - II de la Fig 1, dans une première forme de réalisation, la vanne d'arrivée de fluide étant ouverte.
Fig 3 est une coupe partielle selon la ligne II - II de la Fig 1, dans une seconde forme de réalisation, la vanne d'arrivée de fluide étant ouverte.
Fig 4 est une coupe selon la ligne IV - IV de la Fig 3.
Fig 5 est une coupe du dispositif selon l'invention dans une troisième forme de réalisation
Fig 6 est une coupe selon la ligne VI - VI de la Fig 5.

La tête de remplissage désignée par (1) comporte un conduit d'arrivée (2) et de sortie (3) de fluide, une vanne (4) pour régler le débit d'arrivée de fluide, une vanne d'arrivée de vapeur (5) et une vanne (6) de sortie de vapeur et de vidange de fluide résiduel. Les chevilles des vannes (5) et (6) sont déplaçables grâce à des systèmes pneumatiques ou similaires (non représentés).

Sous la tête de remplissage proprement dite, on dispose un emballage (7) comportant un embout (8) avec une membrane déchirable (9) et une membrane de fermeture (10) partiellement scellée contre l'embout (8) pour permettre le remplissage. L'emballage est maintenu en place grâce à des mâchoires (11), sous lesquelles est disposée la tête de scellage (31) qui assure la fermeture de l'emballage en fin de remplissage. Cette tête de scellage comprend un anneau de scellage (12).

La tête de remplissage comporte une membrane souple (13) pincée entre les deux parties (14, 15) maintenues solidaires grâce à la bague de serrage (16). Cette membrane souple est soit en polytétrafluoréthylène, soit en caoutchouc, soit en une matière souple de bonne résistance mécanique et thermique. La cheville de la vanne (4) est déplaçable verticalement grâce à des systèmes pneumatiques ou similaires (non représentés) entre des coussinets (17).

La membrane (13) est percée en son centre et traversée par la cheville de soupape (4). Cette cheville se compose de trois parties: la partie supérieure (18) dans laquelle est vissée avec le boulon (21) la partie (19) assurant aussi un pincement de la membrane souple (13).

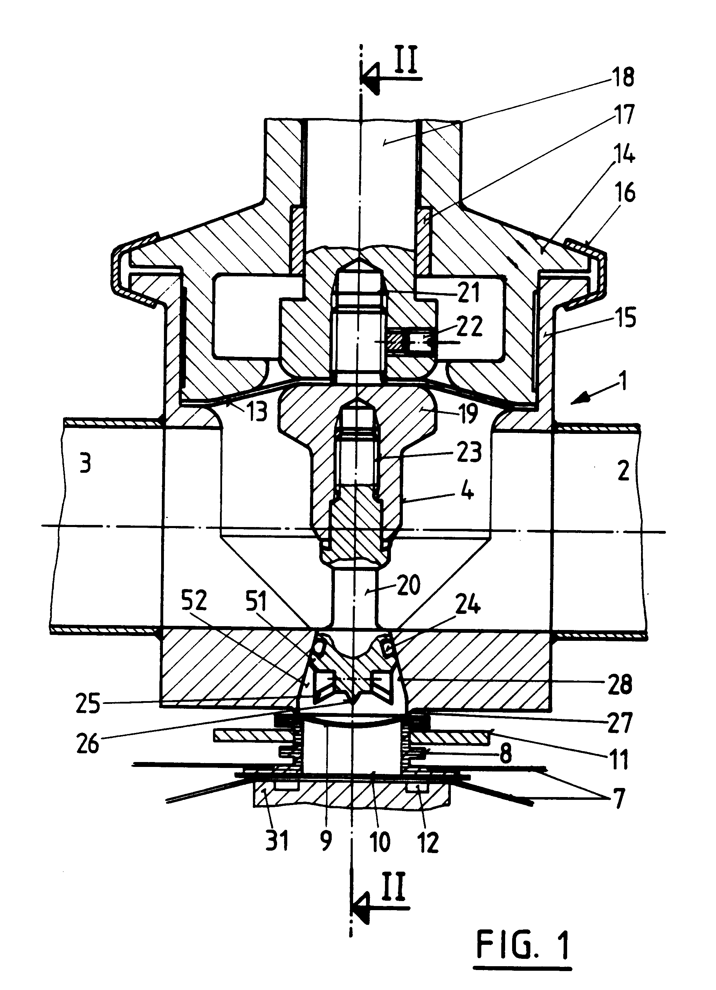

La vis de blocage (22) assure un bon maintien et donc une bonne étanchéité de la membrane (13). La cheville comporte finalement une partie basse (20) vissée dans l'élément (19) grâce au boulon (23). Cette partie (20) comportant un cône (51) assure l'ouverture/fermeture pour le remplissage de l'emballage. Elle comprend un joint d'étanchéité (24) et deux couteaux radiaux (25) disposés perpendiculairement. Ces couteaux forment une pointe centrale (26) permettant encore d'améliorer la découpe de la membrane (9). Une protubérance annulaire (27) permet d'assurer un bon maintien de la membrane (9) lors de la descente de l'organe de coupe (25) et lors de la stérilisation. Pour améliorer encore le maintien de la membrane (9), on peut prévoir plusieurs protubérances annulaires concentriques. L'ouverture (28) pour le passage du fluide est dans le cas des Fig 1, 2 et 3 de forme tronconique. Cette ouverture constitue également le siège pour le cône (51).

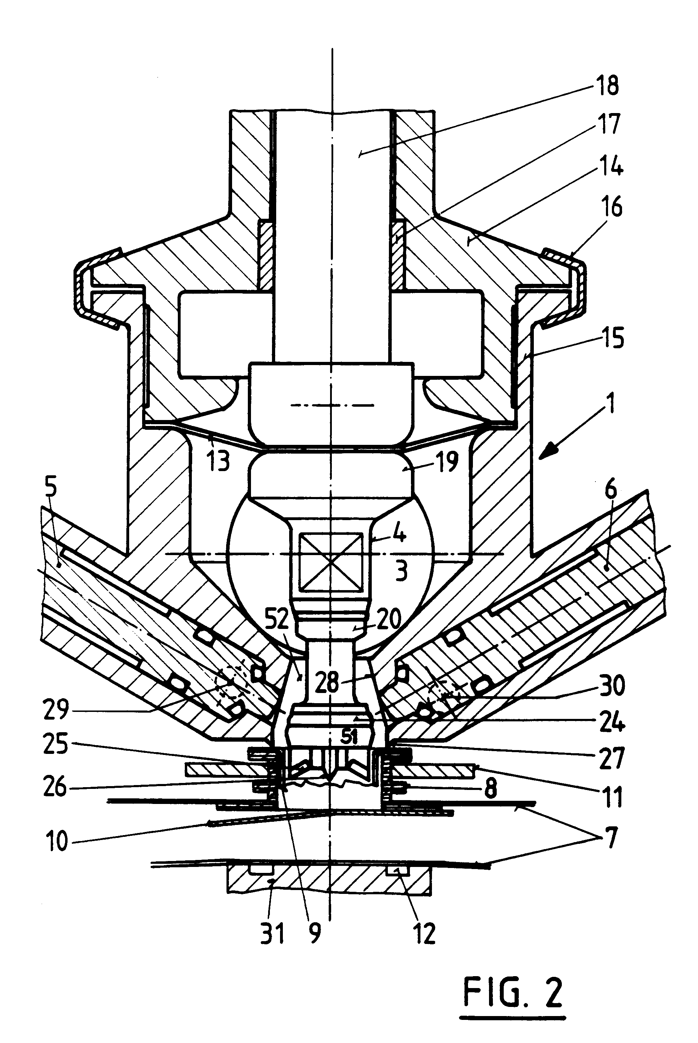

Le fonctionnement du dispositif est le suivant : La vanne (4) étant fermée (Fig 1), l'emballage (7) étant en place, on effectue une stérilisation de l'espace de tête (52) et de la membrane (9) en ouvrant la vanne d'arrivée de vapeur (5). La vapeur arrive par la conduite (29). Elle ressort par la conduite (30) de la vanne (6). En fin de stérilisation, on ferme les deux vannes (5) et (6) et on ouvre la vanne (4) (Fig 2). L'élément (20) descend et les couteaux (25) ouvrent la membrane déchirable (9). En même temps le fluide est libéré et pénètre dans l'emballage (7) par l'ouverture (28). Il est bien entendu que lors du remplissage, la tete de scellage (31) est en position basse. En fin de remplissage, la tête de scellage remonte, on ouvre les vannes (5) et (6) de manière à ce que la vapeur chasse le produit résiduel qui s'écoule par le conduit (30). Pendant ou à la fin de cette opération de nettoyage, l'anneau de scellage (12) est chauffé, fermant ainsi l'emballage (7). Les mâchoires (11) peuvent alors libérer ledit emballage.

Pour éviter l'infection de l'espace de tête de remplissage pendant le changement d'emballage, on laisse la vanne (5) d'arrivée de vapeur ouverte ou mi-ouverte.

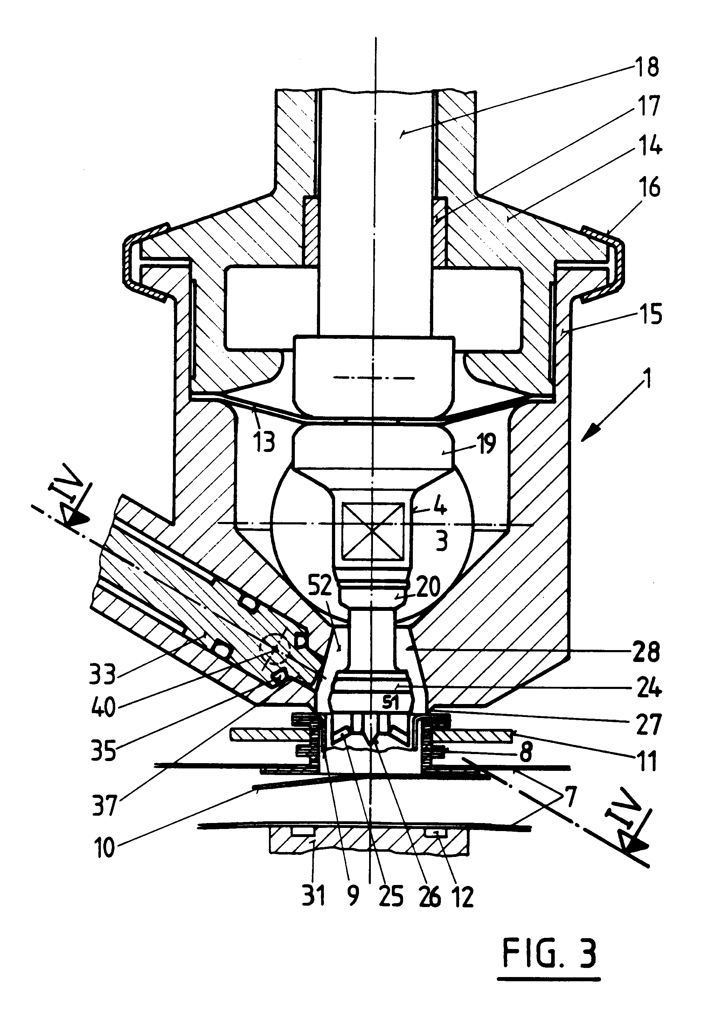

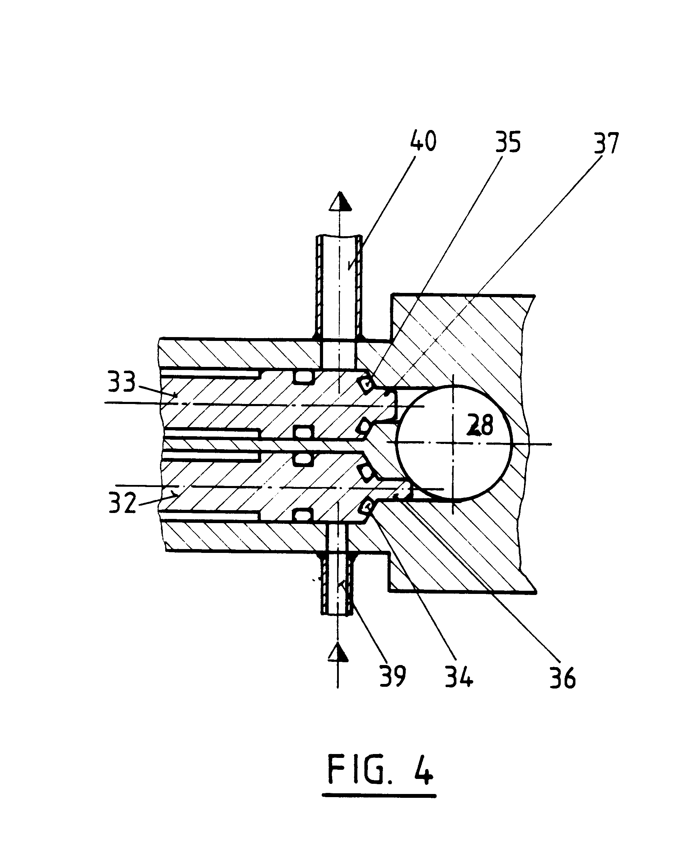

Les Fig 3 et 4 représentent le dispositif selon l'invention dans une seconde forme de réalisation. Les éléments qui sont identiques à ceux des Fig 1 et 2 ont été affectés des mêmes numéros de référence. Ce dispositif diffère de celui des Fig 1 et 2 en ce que les vannes d'arrivée de vapeur (32) et de sortie de vapeur et de vidange (33) sont disposées du même côté du plan formé par l'axe de conduit d'arrivée et de sortie de fluide et l'axe de la vanne pour régler le débit d'arrivée de fluide. Tout le reste du dispositif est identique à précédemment. Les chevilles des vannes (32) et (33) se déplacent avec le même entranement, par exemple grâce à un seul système pneumatique (non représenté). Ceci constitue donc le grand avantage par rapport au dispositif des Fig 1 et 2. Chaque cheville de vanne présente un joint d'étanchéité (34) et (35) et des pointeaux (36) et (37) de forme différente. La vapeur arrive par le conduit (39) et sort par le conduit (40). Du fait que les chevilles des vannes (32) et (33) ont le même entraînement, elles coulissent de manière synchrone. L'intérêt d'avoir des pointeaux (36) et (37) différents est le suivant: lorsqu'en fin de stérilisation de l'espace de tête de remplissage ou en fin de nettoyage on referme les vannes (32) et (33), la vanne (32) se referme avant, laissant ainsi encore la possibilité à la vapeur ou au produit résiduel de sortir par la conduite (40). Le reste des opérations de fonctionnement est le même que celui des Fig 1 et 2.

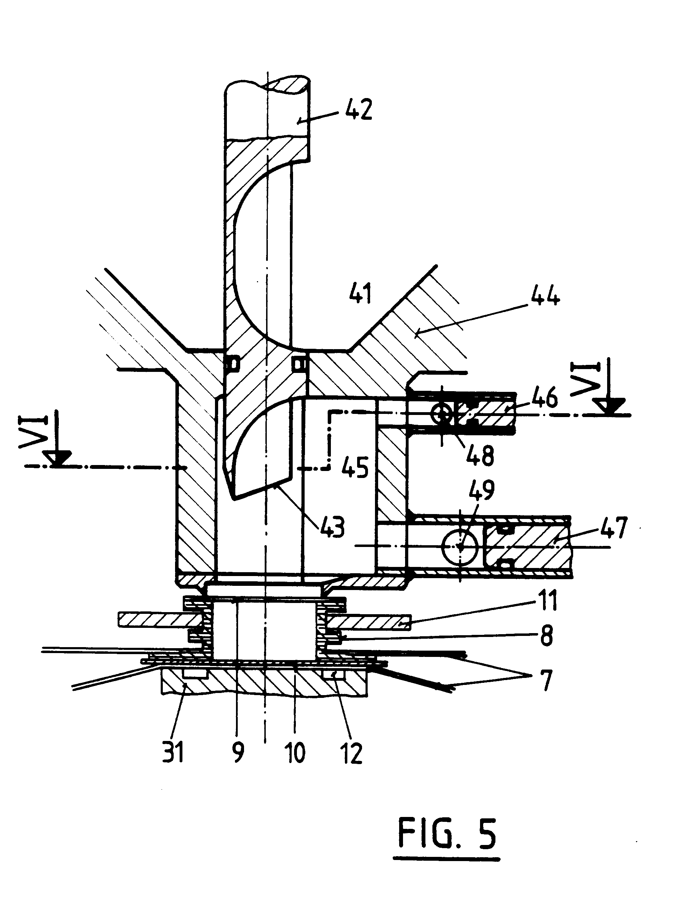

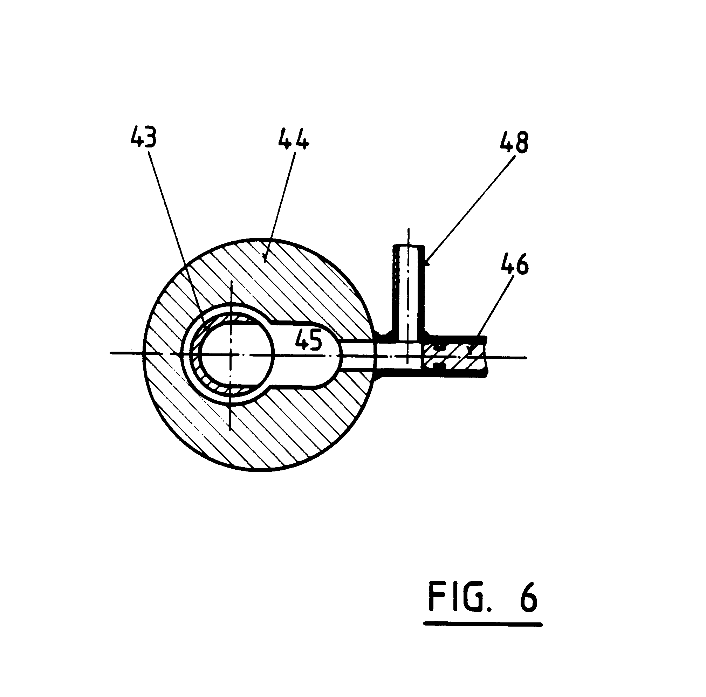

Les Fig 5 et 6 représentent une troisième forme de réalisation du dispositif selon l'invention avec une forme spécifique des couteaux. Cette forme convient plus spécialement pour le remplissage de fluide avec morceaux. L'emballage et la tête de scellage étant les mêmes que pour les Fig 1 à 4, ces éléments ont été affectés des mêmes numéros de référence. Le conduit d'arrivée de fluide (41) est fermé grâce à la vanne (42). Cette vanne présente un couteau (43) en forme de U. La tête de remplissage (44) présente une chambre intermédiaire (45) entre le conduit (41) et l'embout (8) de l'emballage (7). La vanne (46) comporte un conduit d'arrivée de vapeur (48) et la vanne (47) un conduit de vidange (49). A noter que les vannes (46) et (47) ne sont pas côte à côte mais superposées. Elles peuvent avoir également un entraînement unique qui les ouvre et les ferme de manière synchrone. Le fonctionnement est le même que pour les Fig 1 à 4. On stérilise l'espace de tête de remplissage et la membrane (9) en ouvrant les vannes (46) et (47). On les referme ensuite et on ouvre la vanne (42) d'arrivée de fluide. Lors de la descente de cette vanne, le couteau (43) coupe la membrane (9) et le remplissage a lieu. La chambre (45) permet un bon écoulement du fluide, particulièrement en cas de présence de morceaux. En fin de remplissage, on referme la vanne (42) et on effectue un nettoyage de la chambre intermédiaire (45). La tête de scellage (31) est ensuite soulevée et l'anneau de scellage (12) scelle la membrane de fermeture (10) contre l'embout (8). Si on opère sans membrane de fermeture, c'est directement la paroi de l'emballage qui est scellée contre l'embout (8).

Sur une ligne de remplissage aseptique, on peut placer ainsi plusieurs dispositifs selon les Fig 1 à 6 en série.

On dispose ainsi selon l'invention d'un dispositif de grande sûreté sur le plan de l'asepsie, de conception relativement plus simple que ce qui existe actuellement dans l'état de la technique et permettant de faire une coupure très nette sur la membrane déchirable.

## Revendications

1. Procédé pour remplir aseptiquement avec un fluide un emballage (7) pourvu d'un embout (8) avec membrane extérieure déchirable (9), dans lequel, l'emballage étant stérile et fermé, on stérilise l'espace de tête de remplissage (52) et la partie extérieure de la membrane déchirable, et à la fin du remplissage on ferme l'arrivée de fluide et on admet de la vapeur ou de l'air stérile pour déplacer le fluide restant de l'espace de tête de remplissage (52) vers une conduite de vidange, caractérisé en ce qu'on coupe la membrane extérieure déchirable (9), et on admet le fluide dans l'emballage (7) de manière concomittante et en ce que la vapeur ou l'air stérile est admis perpendiculairement par rapport à la direction de déplacement du fluide.

2. Procédé selon la revendication 1, caractérisé en ce qu'on stérilise l'espace de tête de remplissage (52) pendant 2 à 30 secondes à une température comprise entre 135 et 165°C sous une pression de vapeur comprise entre 2 et 6 atmosphères.

3. Procédé selon la revendication 1, caractérisé en ce qu'à la fin du cycle de remplissage, on injecte de la vapeur à une pression comprise entre 1 et 4 atmosphères et à une température comprise entre 120 et 150°C ou de l'air stérile à température ambiante et à une pression comprise entre 0,5 et 3 atmosphères pendant 0,5 à 2 secondes.

4. Dispositif pour la mise en oeuvre du procédé selon les revendications 1 à 3, comprenant une tête de remplissage (1) comportant une vanne (4) pour régler le débit d'arrivée de fluide et des moyens de coupe (25), un support d'emballage (11, 31) disposé sous la tête de remplissage et prévu pour sceller l'emballage (7) en fin de remplissage, un conduit d'arrivée (2) et de sortie (3) de fluide et sur le bas de ladite tête de remplissage une vanne d'arrivée de vapeur (5) et une vanne (6) avec une conduite de sortie de vapeur et de vidange pour le nettoyage en fin de remplissage caractérisé en ce que la vanne (4) pour régler le débit d'arrivée de fluide est telle que ses moyens de coupe (25) coupent la membrane déchirable lors de son ouverture, cette vanne (4) a un axe qui est perpendiculaire à l'axe du conduit d'arrivée (2) et de sortie (3) de fluide et la vanne d'arrivée de vapeur (5) et la vanne (6) avec une conduite de sortie de vapeur sont disposées perpendiculairement par rapport à l'axe du conduit d'arrivée (2) et de sortie (3) de fluide.

5. Dispositif selon la revendication 4, caractérisé en ce que la vanne d'arrivée de vapeur (5) et la vanne de sortie de vapeur et de vidange (6) sont disposées de part et d'autre du plan formé par l'axe de conduit d'arrivée (2) et de sortie (3) de fluide et l'axe de la vanne (4) pour régler le débit d'arrivée de fluide et perpendiculairement à l'axe du conduit d'arrivée (2) et de sortie (3) de fluide.

6. Dispositif selon la revendication 4, caractérisé en ce que la vanne d'arrivée de vapeur (5) et la vanne de sortie de vapeur et de vidange (6) sont disposées parallèlement du même côté du plan formé par l'axe de conduit d'arrivée (2) et de sortie (3) de fluide et l'axe de la vanne (4) pour régler le débit d'arrivée de fluide et perpendiculairement à l'axe d'arrivée (2) et de sortie (3) de fluide.

7. Dispositif selon l'une des revendications 4 à 6, caractérisé en ce que l'axe de la vanne (4) pour régler le débit d'arrivée de fluide et l'axe de la vanne d'arrivée de vapeur (5) respectivement l'axe de la vanne de sortie de vapeur et de vidange (6) font un angle compris entre 40 et 80°.

8. Dispositif selon l'une des revendications 4 à 6, caractérisé en ce que l'ouverture (28) sur la tête de remplissage pour le passage de fluide dans l'emballage est de forme tronconique ou cylindrique.

9. Dispositif selon l'une des revendications 4 à 8, caractérisé en ce que les moyens de coupe (25) sont constitués par des couteaux radiaux et verticaux.

10. Dispositif selon l'une des revendications 4 à 8, caractérisé en ce que les moyens de coupe (43) sont constitués par des couteaux en forme de U et qu'il y a entre le conduit d'arrivée et de sortie de fluide et l'emballage une chambre de passage intermédiaire (45).

11. Dispositif selon l'une des revendications 4 à 10, caractérisé en ce que la vanne (4) pour régler le débit d'arrivée de fluide comporte une membrane souple (13) ou une membrane à soufflets.

12. Ligne de remplissage aseptique, caractérisé en ce qu'elle comprend disposés en série au moins deux dispositifs selon l'une des revendications 4 à 11.

## Claims

1. A process for aseptically filling with a fluid a pack (7) provided with a spout (8) incorporating an outer tearable membrane (9) in which, the pack being sterile and closed, the filling head space (52) and the outer part of the tearable membrane are sterilized and, on completion of the filling process, the delivery of fluid is shut off and steam or sterile air is admitted to displace the remaining fluid from the filling head space (52) to an emptying pipe, characterized in that the outer tearable membrane (9) is cut and the fluid is concomitantly admitted into the pack (7) and in that the steam or sterile air is admitted perpendicularly in relation to the direction in which the fluid is displaced.

2. A process as claimed in claim 1, characterized in that the filling head space (52) is sterilized for 2 to 30 seconds at a temperature between 135 and 165°C and under a steam pressure of 2 to 6 atmospheres.

3. A process as claimed in claim 1, characterized in that on completion of the filling cycle, steam under a pressure of 1 to 4 atmospheres and at a temperature of 120 to 150°C or sterile air at ambient temperature and under a pressure of 0.5 to 3 atmospheres is injected for 0.5 to 2 seconds.

4. A device for carrying out the process claimed in claims 1 to 3, comprising a filling head (1) with a valve (4) to regulate the fluid delivery rate and the cutting means (25), a pack support (11,31) disposed beneath the filling head and designed to seal the pack (7) on completion of the filling cycle, a fluid inlet and outlet pipe (2,3) and, at the bottom of the filling head, a steam inlet valve (5) and a valve (6) with a steam outlet and emptying pipe for the cleaning operation at the end of the filling cycle, characterized in that the valve (4) for regulating the fluid delivery rate is such that its cutting means (25) cut the tearable membrane during opening of the valve, the valve (4) has an axis which is perpendicular to the axis of the fluid inlet and outlet pipe (2,3) and the steam inlet valve (5) and the valve (6) with a steam outlet pipe are arranged perpendicularly in relation to the axis of the fluid inlet and outlet pipe (2,3).

5. A device as claimed in claim 4, characterized in that the steam inlet valve (5) and the steam outlet and emptying valve (6) are disposed on either side of the plane formed by the axis of the fluid inlet and outlet pipe (2,3) and the axis of the valve (4) for regulating the fluid delivery rate and perpendicularly of the axis of the fluid inlet and outlet pipe (2,3).

6. A device as claimed in claim 4, characterized in that the steam inlet valve (5) and the steam outlet and emptying valve (6) are disposed parallel on the same side of the plane formed by the axis of the fluid inlet and outlet pipe (2,3) and the axis of the valve (4) for regulating the fluid delivery rate and perpendicularly of the fluid inlet and outlet axis (2,3).

7. A device as claimed in any of claims 4 to 6, characterized in that the axis of the valve (4) for regulating the fluid delivery rate forms an angle of 40 to 80° with the axis of the steam inlet valve (5) and with the axis of the steam outlet and emptying valve (6).

8. A device as claimed in any of claims 4 to 6, characterized in that the opening (28) at the filling head for the entry of fluid into the pack is frustoconical or cylindrical in shape.

9. A device as claimed in any of claims 4 to 8, characterized in that the cutting means (25) are formed by radial and vertical cutters.

10. A device as claimed in any of claims 4 to 8, characterized in that the cutting means (43) are formed by U-shaped cutters and in that there is an intermediate flow chamber (45) between the fluid inlet and outlet pipe and the pack.

11. A device as claimed in any of claims 4 to 10, characterized in that the valve (4) for regulating the fluid delivery rate comprises a flexible membrane (13) or an expanding membrane (15).

12. An aseptic filling line, characterized in that it comprises at least two devices of the type claimed in any of claims 4 to 11 arranged in series.

## Patentansprüche

1. Verfahren zum aseptischen Füllen einer Verpackung (7), die mit einem Aufsatz (8) mit einer äußeren durchtrennbaren Membran (9) versehen ist, mit einem Fluid, bei welchem bei steriler und geschlossener Verpackung der Füllkopfraum (52) und der äußere Teil der durchtrennbaren Membran sterilisiert wird, nach dem Füllen der Fluideintritt geschlossen wird und Dampf oder sterile Luft eingeleitet wird, um das im Füllkopfraum (52) verbliebene Fluid zu einer Entleerungsleitung zu bewegen, dadurch gekennzeichnet, daß die äußere durchtrennbare Membran (9) durchgeschnitten wird und gleichzeitig das Fluid in die Verpackung (7) eingelassen wird und daß der Dampf oder die sterile Luft senkrecht zur Bewegungsrichtung des Fluids eingeleitet wird.

2. Verfahren nach Anspruch 1, dadurch gekennzeichnet, daß der Füllkopfraum (52) 2 bis 30 Sekunden lang bei einer Temperatur von 135 bis 165°C unter einem Dampfdruck von 2 bis 6 atm sterilisiert wird.

3. Verfahren nach Anspruch 1, dadurch gekennzeichnet, daß am Ende des Füllzyklus Dampf mit einem Druck von 1 bis 4 atm und einer Temperatur von 120 bis 150°C oder sterile Luft mit Umgebungstemperatur und einem Druck von 0,5 bis 3 atm 0,5 bis 2 Sekunden lang eingeleitet wird.

4. Vorrichtung zur Durchführung des Verfahrens nach den Ansprüchen 1 bis 3, die einen Füllkopf (1) mit einem Ventil (4) zum Regeln des Fluideintrittsdurchsatzes und Schneideinrichtungen (25), einen unter dem Füllkopf angeordneten Verpakkungshalter (11, 31), der zum Versiegeln der Verpackung (7) bei Beendigung der Füllung vorgesehen ist, einen Fluideintrittskanal (2), einen Fluidaustrittskanal (3) und am unteren Ende des Füllkopfes ein Dampfeintrittsventil (5) und ein Ventil (6) mit einer Dampfaustritts- und Entleerungsleitung für die Reinigung bei Beendigung der Füllung umfaßt, dadurch gekennzeichnet, daß das Ventil (4) zur Regelung des Fluideintrittsdurchsatzes so beschaffen ist, daß seine Schneideinrichtungen (25) die durchtrennbare Membran bei seiner Öffnung durchschneiden, wobei die Achse dieses Ventils (4) zur Achse der Fluideintrittsleitung (2) und der Fluidaustrittsleitung (3) senkrecht ist und das Dampfeintrittsventil (5) und das Ventil (6) mit einer Dampfaustrittsleitung senkrecht zur Achse der Fluideintrittsleitung (2) und der Fluidaustrittsleitung (3) angeordnet sind.

5. Vorrichtung nach Anspruch 4, dadurch gekennzeichnet, daß das Dampfeintrittsventil (5) und das Dampfaustritts- und Entleerungsventil (6) zu beiden Seiten der Ebene, in der die die Achse der Fluideintrittsleitung (2) und der Fluidaustrittsleitung (3) und die Achse des Ventils (4) zur Regelung des Fluideintrittsdurchsatzes liegen, und senkrecht zur Achse der Fluideintrittsleitung (2) und der Fluidaustrittsleitung (3) angeordnet sind.

6. Vorrichtung nach Anspruch 4, dadurch gekennzeichnet, daß das Dampfeintrittsventil (5) und das Dampfaustritts- und Entleerungsventil (6) parallel auf einer gemeinsamen Seite der Ebene, in der die Achse der Fluideintrittsleitung (2) und der Fluidaustrittsleitung 3 und die Achse des Ventils (4) zur Regelung des Fluideintrittsdurchsatzes liegen, und senkrecht zur Achse der Fluideintrittsleitung (2) und der Fluidaustrittsleitung (3) angeordnet sind.

7. Vorrichtung nach einem der Ansprüche 4 bis 6, dadurch gekennzeichnet, daß die Achse des Ventils 4 zur Regelung des Fluideintrittsdurchsatzes und die Achse des Dampfeintrittsventils (5) bzw. die Achse des Dampfaustritts- und Entleerungsventils (6) einen Winkel von 40 bis 80° bilden.

8. Vorrichtung nach einem der Ansprüche 4 bis 6, dadurch gekennzeichnet, daß die Öffnung (28) im Füllkopf für den Durchgang des Fluids in die Verpackung kegelstumpfförmig oder zylindrisch ist.

9. Vorrichtung nach einem der Ansprüche 4 bis 8, dadurch gekennzeichnet, daß die Schneideinrichtungen (25) aus radialen und vertikalen Messern bestehen.

10. Vorrichtung nach einem der Ansprüche 4 bis 8, dadurch gekennzeichnet, daß die Schneideinrichtungen (43) aus U-förmigen Messern bestehen und daß zwischen der Fluideintritts-und -austrittsleitung und der Verpackung eine Zwischendurchgangskammer (45) vorgesehen ist.

11. Vorrichtung nach einem der Ansprüche 4 bis 10, dadurch gekennzeichnet, daß das Ventil (4) zur Regelung des Fluideintrittsdurchsatzes eine biegsame Membran (13) oder eine balgartige Membran umfaßt.

12. Aseptische Füllstrecke, dadurch gekennzeichnet, daß sie wenigstens zwei in einer Reihe angeordnete Vorrichtungen gemäß einem der Ansprüche 4 bis 11 umfaßt.
